# EUROPEAN PATENT APPLICATION

(11) **EP 4 787 539 A1**
(43) Date of publication of application: **05.08.2026**
(21) Application number: 25869580.8
(22) Date of filing: 14.03.2025
(51) Int. Cl.: H01M 10/61, H01M 10/6556, H01M 10/6551

(54) **THERMAL MANAGEMENT COMPONENT AND BATTERY PACK**

(30) Priority: 27.11.2024 CN 202422911406 U
(71) Applicant: Eve Energy Co., Ltd., Huizhou, Guangdong 516006 (CN)
(72) Inventor: ZHAO, Yuhang, Huizhou, Guangdong 516006 (CN); HUANG, Minzhi, Huizhou, Guangdong 516006 (CN); LI, Biqiang, Huizhou, Guangdong 516006 (CN); LIU, Jianwen, Huizhou, Guangdong 516006 (CN)
(74) Representative: Zhu, Puxing
(86) International application number: PCT/CN2025/082619
(87) International publication number: WO 2026/113184

(57) **Abstract**

The application provides thermal management components and battery packs, relating to battery technologies. The thermal management component includes a current collector, a thermal management plate and a connecting adhesive layer. The current collector has an inner cavity and a plug hole in communication with the inner cavity. The thermal management plate has a flow channel, an end of the thermal management plate is plugged into the plug hole. The flow channel is communicated with the inner cavity. The connecting adhesive layer is disposed between an inner wall of the plug hole and the thermal management plate, and sealingly connects an outer wall of the thermal management plate to the inner wall of the plug hole.

## Description

This application claims priority to Chinese patent application No. 202422911406.7, filed with the China Patent Office on November 27, 2024. The disclosure of the above mentioned application is incorporated herein by reference in its entirety.

### TECHNICAL FIELD

The present application relates to battery technologies, and in particular to thermal management components and battery packs.

### BACKGROUND

To maintain a battery operating within a suitable temperature range, a thermal management system is required to heat up or cool down the battery. In related technologies, a thermal management system includes pipelines, thermal management components connected to the pipelines, and a temperature adjustment module for adjusting the temperature of the heat exchange medium in the pipelines. There are multiple thermal management components which are connected in parallel to the pipelines. The thermal management components are thermally coupled to battery cells to manage the temperature of the battery cells.

The thermal management component includes a current collector and a thermal management plate with an end in plug connection with the current collector. Flow channels are provided inside the thermal management plate and communicate with the inner cavity of the current collector, so as to supply liquid to and drain liquid from the flow channels of the thermal management plate through the current collector, thereby realizing the circulation of the heat exchange medium.

### SUMMARY

Since the current collector and the thermal management plate are connected and sealed by welding, the assembly between the current collector and the thermal management plate is difficult and the assembly efficiency is low, resulting in a high assembly cost of the thermal management system.

In a first aspect, the present application provides a thermal management component which includes a current collector, a thermal management plate and a connecting adhesive layer; the current collector has an inner cavity and a plug hole communicating with the inner cavity; the thermal management plate has a flow channel, an end of the thermal management plate is plugged into the plug hole, and the flow channel is communicated with the inner cavity; the connecting adhesive layer includes a sealing adhesive layer and a structural adhesive layer, the sealing adhesive layer and the structural adhesive layer are both disposed between the hole wall of the plug hole and the outer circumferential surface of the thermal management plate, and both extend in an annular shape along the circumference of the plug hole.

In a second aspect, the present application provides a battery pack including a battery cell column and the aforementioned thermal management component; there are multiple battery cell columns which are arranged in sequence in a first direction, and each of battery cell columns includes multiple battery cells arranged in sequence in a second direction; there are multiple thermal management components; and in the first direction, the multiple thermal management components and the multiple battery cell columns are alternately arranged in sequence.

### ADVANTAGEOUS EFFECTS

The present invention simplifies the assembly steps of the thermal management component by adhesively connecting the thermal management plate with the current collector, thereby shortening the time for connecting and fixing the thermal management plate to the current collector, and further improving the assembly and molding efficiency of the thermal management component.

### BRIEF DESCRIPTION OF THE DRAWINGS

FIG. 1 is a schematic diagram of a structure of a thermal management component according to some embodiments of the present application.
FIG. 2 is a top view of a thermal management component according to some embodiments of the present application.
FIG. 3 is a cross-sectional view along line A-A in FIG. 2.
FIG. 4 is an enlarged view of B in FIG. 2.
FIG. 5 is a cross-sectional view along line C-C in FIG. 2.
FIG. 6 is an enlarged view of D in FIG. 5.
FIG. 7 is a schematic diagram of an enlarged view of another structure at B according to some embodiments of the present application.
FIG. 8 is a schematic diagram of a structure of a current collector according to some embodiments of the present application.
FIG. 9 is a schematic diagram of a structure of a plug connection of two current collectors according to some embodiments of the present application.
FIG. 10 is a cross-sectional view of a current collector according to some embodiments of the present application.
FIG. 11 is a schematic diagram of a structure of a battery pack according to some embodiments of the present application.
FIG. 12 is a schematic diagram of a structure of a connection of a thermal management component and a temperature adjustment module according to some embodiments of the present application.

### Description of reference numerals:

1 - current collector; 11 - current collecting unit;
12 - main body; 121 - inner cavity; 122 - plug hole; 123 - first hole; 124 - second hole;
13 - male pipe connector; 133 - wedge-shaped block;
**14** - female pipe connector; 142 - second constant-diameter section; 143 - second flared section;
15 - flexible sleeve; 152 - first constant-diameter section; 153 - first flared section;
2 - thermal management component; 21 - thermal management plate; 211 - connecting end surface; 22 - flow channel; 23 - plug end;
24 - connecting adhesive layer; 243 - sealing adhesive layer; 244 - structural adhesive layer;
3 - thermal management system; 31 - liquid inlet pipe; 32 - liquid outlet pipe; 33 - temperature adjustment module;
4 - battery pack; 41 - battery cell.

### DETAILED DESCRIPTION

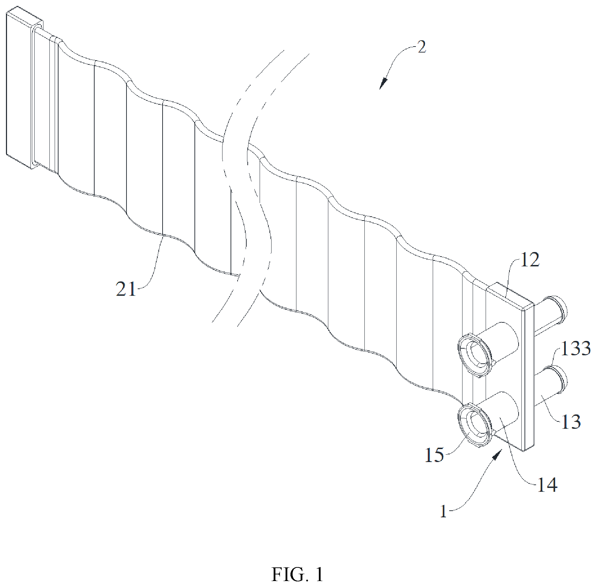

The following describes in detail thermal management components and battery packs according to some embodiment of the present application in conjunction with FIG. 1 to FIG. 12.

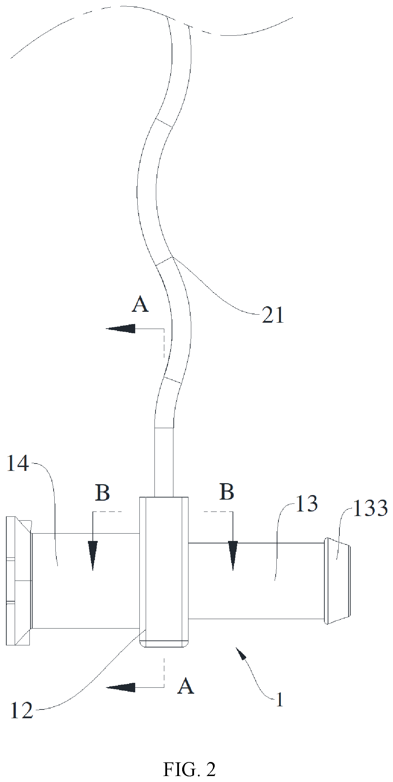

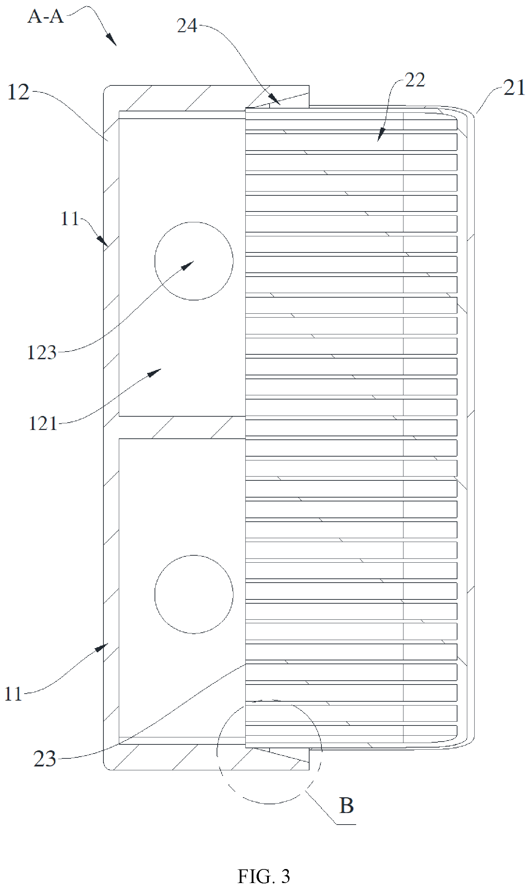

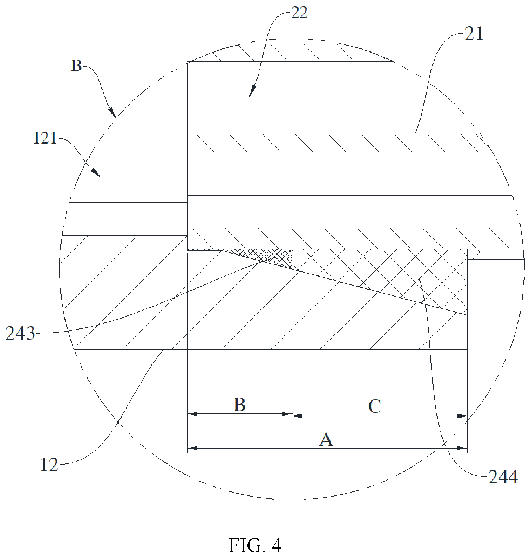

Please refer to FIG. 1 to FIG. 3. FIG. 1 is a schematic diagram of a structure of a thermal management component 2 according to some embodiments of the present application. FIG. 2 is a top view of the thermal management component 2 according to some embodiments of the present application. FIG. 3 is a cross-sectional view along line A-A in FIG. 2. Some embodiments of the present application provide a thermal management component 2. The thermal management component 2 includes a current collector 1, a thermal management plate 21, and a connecting adhesive layer 24. The current collector 1 has an inner cavity 121 and a plug hole 122 communicated with the inner cavity 121. The thermal management plate 21 has a flow channel 22. An end of the thermal management plate 21 is plugged into the plug hole 122. The flow channel 22 is communicated with the inner cavity 121. The connecting adhesive layer 24 includes a sealing adhesive layer 243 and a structural adhesive layer 244, as shown in FIG. 4, which is an enlarged view of B in FIG. 2. The sealing adhesive layer 243 and the structural adhesive layer 244 are both disposed between the hole wall of the plug hole 122 and the outer circumferential surface of the thermal management plate 21. The sealing adhesive layer 243 and the structural adhesive layer 244 both extend in an annular shape along the circumference of the plug hole 122.

The adhesive forming the connecting adhesive layer 24 may be made of a silane system, an epoxy system, a polyurethane system, or other materials.

It is understood that a sealant is a type of adhesive that flows when applied to a joint. This allows it easily over the sealing surface when flowing. Once cured, the sealant forms a structurally stable adhesive layer, enhancing the reliability of the connection between two components. Cured sealant typically exhibits a degree of elasticity, allowing it to accommodate expansion and contraction of the joint due to temperature fluctuations or other factors.

It is understood that a structural adhesive is a high-strength adhesive used for structural bonding and can withstand large loads and stresses.

Optionally, the body of the thermal management plate 21 has a harmonica-shaped tube structure and has a plurality of flow channels 22 arranged in parallel inside.

It is understood that when two ports of the flow channel 22 are located respectively at two ends of the thermal management plate 21, one of the two ports of the flow channel 22 is communicated with the inner cavity 121 of a current collector 1. Another one of the two ports of the flow channel 22 can be communicated with the inner cavity 121 of another current collector 1, or communicated with other components.

When the two ports of the flow channel 22 are located at the same end of the thermal management plate 21, the flow channel 22 forms a U-shape. In this case, the inner cavity 121 can be divided into a liquid inlet cavity and a liquid outlet cavity, with the two ports of the flow channel 22 communicating with the liquid inlet cavity and liquid outlet cavity, respectively. This allows the liquid inlet port and liquid outlet port of the thermal management plate 21 to be located at the same side, thereby controlling the size of the thermal management plate 21 and reducing the space it occupies within the battery pack 4.

It is understood that when assembling the thermal management plate 21 and the current collector 1, adhesive may be applied to the wall of the plug hole 122, and then an end of the thermal management plate 21 may be plugged into the plug hole 122 to form a connecting adhesive layer 24, thereby sealingly connecting the outer wall of the thermal management plate 21 to the inner wall of the plug hole 122. Alternatively, adhesive may be applied to the outer wall of the thermal management plate 21 where it mates with the plug hole 122, and then an end of the thermal management plate 21 may be plugged into the plug hole 122 to form a connecting adhesive layer 24, thereby sealingly connecting the outer wall of the thermal management plate 21 to the inner wall of the plug hole 122.

In this embodiment, the assembly steps of the thermal management component 2 can be simplified by adhesively connecting the thermal management plate 21 to the current collector 1, thereby shortening the time for connecting and fixing the thermal management plate 21 to the current collector 1, and further improving the assembly and molding efficiency of the thermal management component 2.

At the same time, by using the sealing adhesive layer 243 and the structural adhesive layer 244 to form the connecting adhesive layer 24, the connecting portion between the thermal management plate 21 and the current collector 1 has good sealing performance to prevent fluid leakage, and the connection portion between the thermal management plate 21 and the current collector 1 has high strength, so that it can withstand a large load, thereby improving the reliability of the thermal management component 2.

In addition, by using adhesive connecting method, the current collector 1, which does not exchange heat with the battery pack 4, can be made of other materials, such as plastic. This reduces the material cost of the current collector 1 and the weight of the thermal management component 2, facilitating a lightweight design of the thermal management system.

Furthermore, by using adhesive connecting method, the adhesive can fill the tiny gap between the thermal management plate 21 and the current collector 1 to provide a good sealing effect, thereby effectively preventing the heat exchange medium from leaking.

Referring to FIG. 4, in some embodiments, a sealing adhesive layer 243 and a structural adhesive layer 244 are sequentially disposed in a direction away from the bottom of the plug hole 122. This effectively prevents the heat exchange medium from affecting the structural adhesive, thereby improving the stability of the structural adhesive and, consequently, the structural reliability of the thermal management component 2.

Please refer to FIG. 4, in some embodiments, in the axial direction of the plug hole 122, a length of the portion of the thermal management plate 21 plugged into the plug hole 122 is A, the sealing adhesive layer 243 has a length B, and the structural adhesive layer 244 has a length C, satisfying: 1mm≤B≤A-1mm, and C=A-B.

In this embodiment, the above solution can ensure the minimum length of the sealing adhesive layer 243 to ensure the sealing between the thermal management plate 21 and the current collector 1, and can also provide space for arranging structural adhesive between the thermal management plate 21 and the current collector 1, so that the adhesive connecting portion between the thermal management plate 21 and the current collector 1 has both sealing and high strength to withstand large loads.

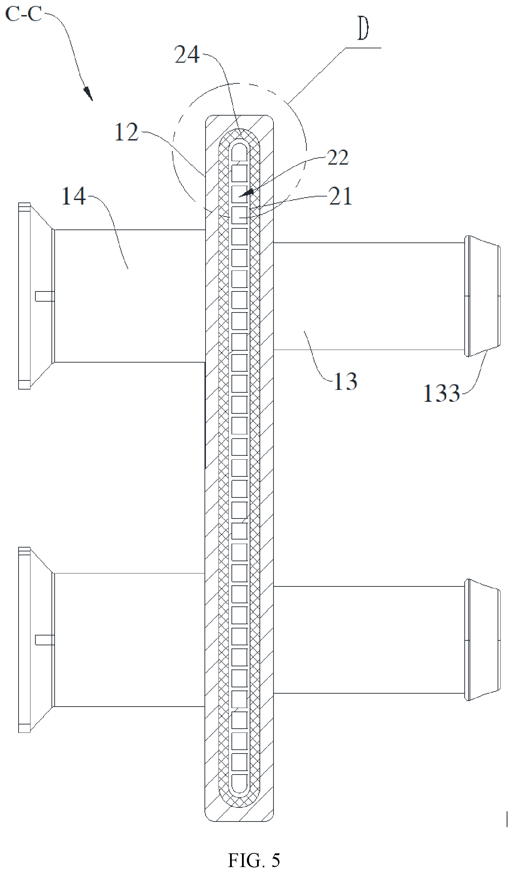

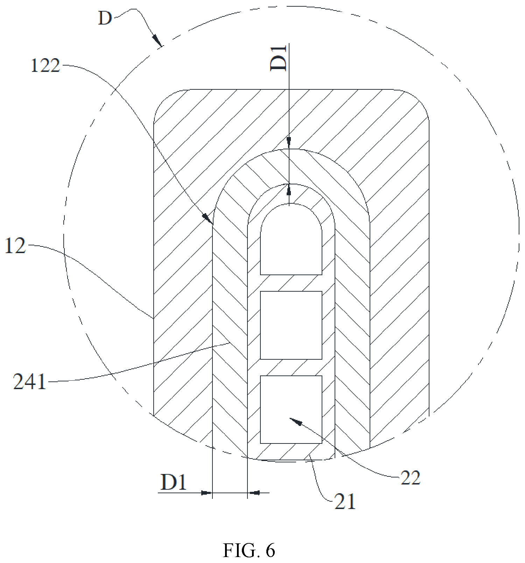

Please refer to FIG. 5 and FIG. 6. FIG. 5 is a cross-sectional view along line C-C in FIG. 2, and FIG. 6 is an enlarged view of D in FIG. 5. In some embodiments, in the radial direction of the plug hole 122, a portion of the connecting adhesive layer 24 located between the hole wall of the plug hole 122 and the outer circumferential surface of the thermal management plate 21 has a thickness D1 that satisfies the following conditions: 1mm≤D1≤15mm,

It can be understood that the thickness D1 includes but is not limited to 2mm, 3mm, 4mm, 6mm, 7mm, 8mm, 10mm, 12mm, 13mm, 14mm, and 15mm.

It can be understood that the portion of the connecting adhesive layer 24 located between the hole wall of the plug hole 122 and the outer circumferential surface of the thermal management plate 21 can be specifically a sealing adhesive layer 243, or a structural adhesive layer 244, or a part thereof can be a sealing adhesive layer 243 and another part can be a structural adhesive layer 244.

In this embodiment, the above-mentioned arrangement can not only improve the connection strength and sealing between the thermal management plate 21 and the current collector 1, thereby improving the reliability of the thermal management component 2, but also avoid the thermal management component 2 being too large due to the size of the above-mentioned structure being too large, thereby ensuring the design compactness of the battery pack 4.

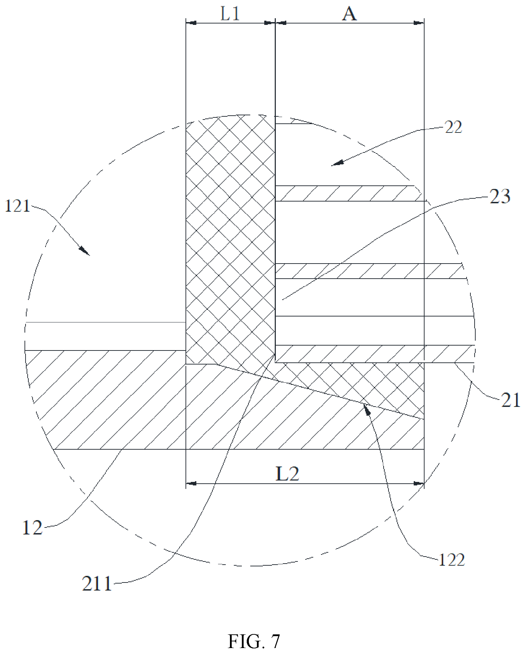

In addition to the structure of the connecting adhesive layer 24 shown in FIG. 4, other embodiments of the present application may also adapt a connecting adhesive layer 24 having the following structures. Please refer to FIG. 7, which is an enlarged schematic diagram of another structure at B according to some embodiments of the present application. In some embodiments, the thermal management plate 21 has a connecting end surface 211 facing the bottom of the plug hole 122. In the axial direction of the plug hole 122, the portion of the connecting adhesive layer 24 located between the connecting end surface 211 and the bottom of the plug hole 122 has a length L1 that satisfies the following conditions: 2mm≤L1≤50mm.

Among them, the length L1 includes but is not limited to 2mm, 3mm, 4mm, 6mm, 7mm, 8mm, 10mm, 12mm, 13mm, 14mm, 16mm, 17mm, 18mm, 20mm, 22mm, 23mm, 24mm, 26mm, 27mm, 28mm, 30mm, 32mm, 33mm, 34mm, 36mm, 37mm, 38mm, 40mm, 42mm, 43mm, 44mm, 46mm, 47mm, 48mm, and 50mm.

It can be understood that the length L1 of the portion of the connecting adhesive layer 24 between the connecting end surface 211 and the bottom of the plug hole 122 specifically refers to the total length of the adhesive layer consisting of the sealing adhesive layer 243 and the structural adhesive layer 244.

In this embodiment, the above-mentioned arrangement can not only improve the connection strength and sealing between the thermal management plate 21 and the current collector 1, thereby improving the reliability of the thermal management component 2, but also avoid the thermal management component 2 being too large due to the size of the above-mentioned structure being too large, thereby ensuring the design compactness of the battery pack 4.

The plug hole 122 is a tapered hole, and its diameter gradually decreases as it approaches the inner cavity 121. When the plug hole 122 is a tapered hole, the thickness D1 refers to the thickness of the portion of the connecting adhesive layer 24 located between the end periphery of the thermal management plate 21 and the wall of the tapered hole.

Please refer to FIG. 7, in some embodiments, the connecting adhesive layer 24 has a length L2 in the axial direction of the plug hole 122, and the depth to which the thermal management plate 21 is plugged into the plug hole 122 is A, satisfying: A+2mm≤L2≤A+50mm.

The length L2 of the connecting adhesive layer 24 includes but is not limited to A+2mm, A+6mm, A+12mm, A+18mm, A+25mm, A+29mm, A+30mm, A+35mm, A+39mm, A+40mm, A+42mm, A+45mm, A+48mm, and A+50mm.

In this embodiment, the above-mentioned limitation can improve the connection strength and sealing between the thermal management plate 21 and the current collector 1, thereby improving the reliability of the thermal management component 2, and can also avoid the thermal management component 2 being too large due to the size of the above-mentioned structure being too large, thereby ensuring the design compactness of the battery pack 4.

Please refer to FIG. 7, in some embodiments, the length of the portion of the thermal management plate 21 plugged into the plug hole 122 is A, satisfying: 2mm≤A≤100mm.

Among them, the length A of the portion of the thermal management plate 21 plugged into the plug hole 122 includes but is not limited to 2mm, 3mm, 4mm, 6mm, 7mm, 8mm, 10mm, 12mm, 16mm, 18mm, 20mm, 24nun, 26mm, 27mm, 30mm, 32mm, 37mm, 38mm, 40mm, 43mm, 44mm, 48mm, 50mm, 52mm, 54mm, 58mm, 60mm, 62mm, 63mm, 66mm, 68mm, 70mm, 73mm, 76mm, 77mm, 80mm, 84mm, 86mm, 88mm, 90mm, 94mm, 96mm, 98mm, and 100mm.

In the above embodiments of the present application, by limiting the length A of the portion of the thermal management plate 21 plugged into the plug hole 122, on the one hand, the matching strength between the thermal management plate 21 and the plug hole 122 can be ensured to improve the reliability of the connection therebetween; on the other hand, it can avoid the thermal management component 2 being too large due to the size of the above-mentioned structure being too large, thereby ensuring the design compactness of the battery pack 4.

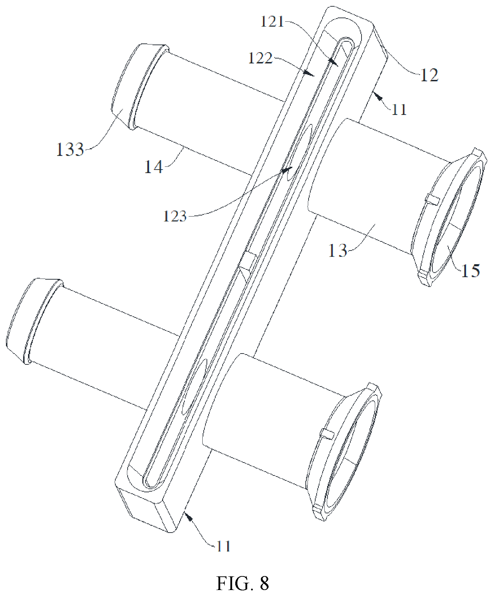

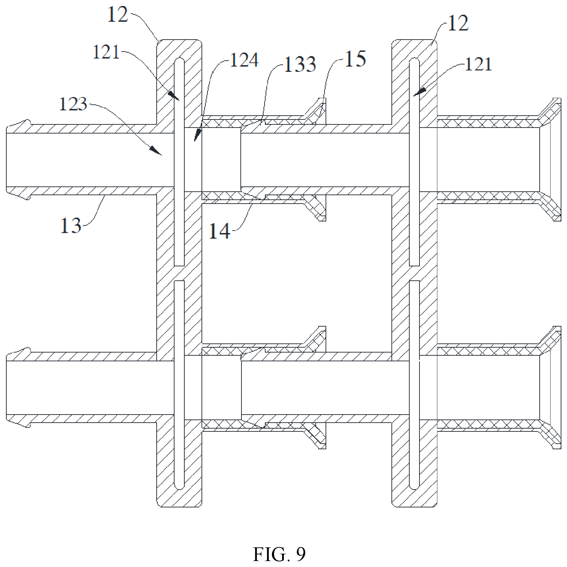

Please refer to FIG. 8, which is a schematic diagram of a structure of the current collector 1 according to some embodiments of the present application. In some embodiments, the current collector 1 includes a current collecting unit 11. The current collecting unit 11 includes a main body 12, a male pipe connector 13, a female pipe connector 14 and a flexible sleeve 15. The main body 12 is provided with an inner cavity 121, a plug hole 122 and a first hole 123 and a second hole 124 that are communicated with the inner cavity 121. The male pipe connector 13 is connected to the current collector 1 and is communicated with the first hole 123. The female pipe connector 14 is connected to the current collector 1 and is communicated with the second hole 124. The flexible sleeve 15 is connected to one of the male pipe connector 13 and the female pipe connector 14. The flexible sleeve 15 is provided on the inner wall of the female pipe connector 14. The flexible sleeve 15 is configured to be sleeved onto a male pipe connector 13 when the female pipe connector 14 of one thermal management component 2 is in plug connection with the male pipe connector 13 of another thermal management component 2, and is in an elastically compressed state in the radial direction, as shown in FIG. 9, which is a schematic diagram of a structure of the plug connection of two current collectors 1 according to some embodiments of the present application.

It can be understood that when the two current collectors 1 are in plug connection, the flexible sleeve 15 is located between the inner circumferential surface of the female pipe connector 14 and the outer circumferential surface of the male pipe connector 13.

The inner diameter of the flexible sleeve 15 is smaller than the outer diameter of the male pipe connector 13, and the difference between the inner diameter and the outer diameter is the radial compression E of the flexible sleeve 15, satisfying: 2mm≤E≤8mm. This effectively ensures both sealing stability and operability of the plug connection of the male pipe connector 13 of one current collector 1 and the female pipe connector 14 of another current collector 1.

In addition, when the current collector 1 includes a single current collecting unit 11, the current collecting unit 11 can serve as both the liquid inlet port and liquid outlet port of the flow channel 22 of the thermal management plate 21. When the current collector 1 includes two current collecting units 11, the two current collecting units 11 serve as the liquid inlet port and liquid outlet port of the flow channel 22 of the thermal management plate 21, respectively. In this case, the two current collecting units 11 can optionally be communicated with each other to allow liquid inlet and outlet at the same end of the thermal management plate 21, thereby improving the structural compactness of the thermal management system.

In the above embodiments, by providing a flexible sleeve 15, not only can the scaling of the plug connection parts of the two current collectors l be achieved, but the flexible sleeve 15 can also provide a longer sealing length between the male pipe connector 13 and the female pipe connector 14, so that the elastic deformation of the flexible sleeve 15 can be used to absorb assembly tolerances and material tolerances, thereby reducing the difficulty of assembly and improving assembly efficiency.

Furthermore, through absorbing assembly tolerances and material tolerances by the elastic deformation of the flexible sleeve 15, the stress state of related components can be improved, thereby enhancing the connection reliability of related components and further enhancing the reliability of the thermal management system.

Optionally, the hardness of the flexible sleeve 15 is 40-90 shore A. In this way, the flexible sleeve 15 can meet the sealing requirements between the male pipe connector 13 and the female pipe connector 14.

Optionally, the material of the flexible sleeve 15 may be one of the following: EPDM (ethylene propylene diene monomer), TPE (thermoplastic elastomer), or TPU (thermoplastic polyurethane). EPDM has an excellent aging resistance, a long service life, and a good flexibility even at low temperatures. TPE is a thermoplastic material with a good fluidity and a plasticity and can be processed by various methods such as an injection molding, an extrusion, and a blow molding. The processing is simple and fast, with a high production efficiency. TPE also has a good flexibility, allowing it to better adapt to irregular surfaces in sealing applications, ensuring a good sealing effect. TPU has a high tensile strength, tear strength and abrasion resistance, as well as a good elasticity and resilience.

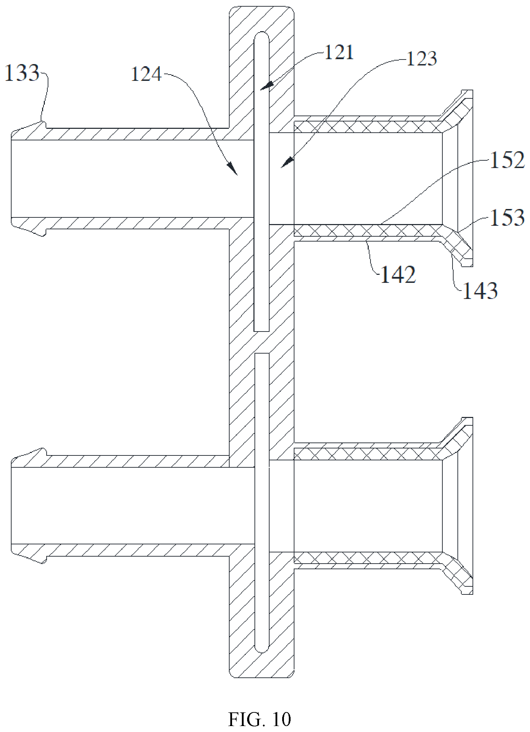

Please refer to FIG. 10, which is a cross-sectional view of the current collector 1 according to some embodiments of the present application. In some embodiments, the flexible sleeve 15 includes a first constant-diameter section 152 and a first flared section 153 that are connected with each other. The outer circumferential surface of the first constant-diameter section 152 is connected to the inner circumferential surface of the female pipe connector 14. The first flared section 153 is located at an end of the first constant-diameter section 152 away from the main body 12. In the direction away from the main body 12, the first flared section 153 gradually increases in size. In this way, when the male pipe connector 13 and the female pipe connector 14 are connected by plugging, the male pipe connector 13 can be guided by the first flared section 153, thereby improving the smoothness of the plugging between them, and further improving the assembly efficiency.

Referring to FIG. 10, in some embodiments, the female pipe connector 14 includes a second constant-diameter section 142 and a second flared section 143. The outer circumferential surface of the first constant-diameter section 152 is connected to the inner circumferential surface of the second constant-diameter section 142. The outer circumferential surface of the first flared section 153 is connected to the inner circumferential surface of the second flared section 143. This increases the connection surface between the female pipe connector 14 and the flexible sleeve 15, improving the reliability of the connection therebetween.

Referring to FIG. 10, in some embodiments, a wedge-shaped block 133 is provided on the outer circumferential surface of the male pipe connector 13. The inclined wedge surface of the wedge-shaped block 133 faces away from the main body 12, and the wedge-shaped block 133 extends in an annular shape along the circumference of the male pipe connector 13. This not only guides the plugging between the male pipe connector 13 and the female pipe connector 14 by the wedge-shaped block 133, improving assembly efficiency, but also increases the interference fit between the flexible sleeve 15 and the male pipe connector 13 by the wedge-shaped block 133, thereby improving the sealing between the male pipe connector 13 and female pipe connectors 14.

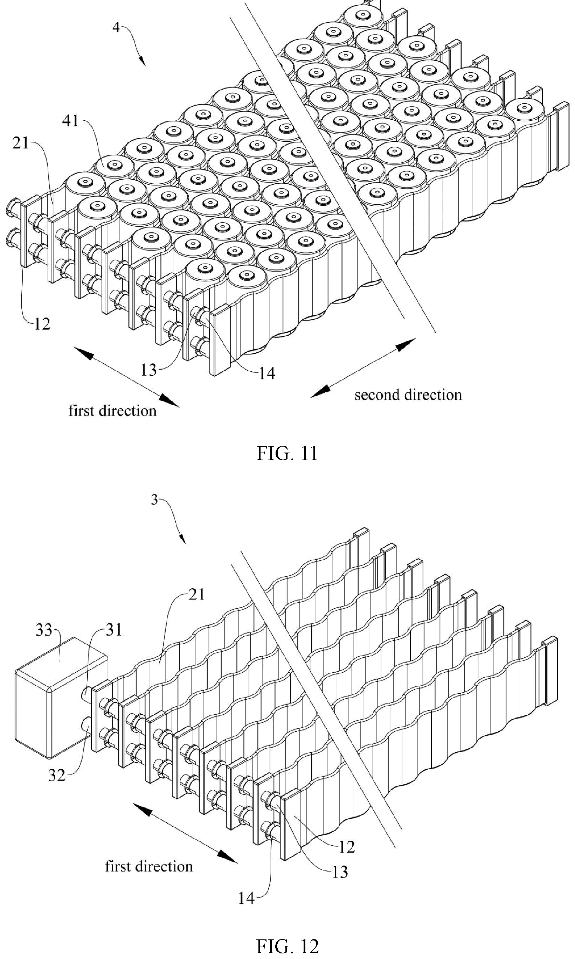

Please refer to FIG. 11 or FIG. 10. In some embodiments, there are two current collecting units 11. The main bodies 12 of the two current collecting units 11 are connected. The plug holes 122 of the two current collecting units 11 are located on the same side of the current collecting unit 1. The male pipe connectors 13 of the two current collecting units 11 face the same direction. The female pipe connectors 14 of the two current collecting units 11 face the same direction. Among them, the portion of an end of the thermal management plate 21 plugged into the plug hole 122 is the plug end 23. A part of the plug end 23 is located in the plug hole 122 of one current collecting unit 11. The other part of the plug end 23 is located in the plug hole 122 of another current collecting unit 11. The flow channel 22 is U-shaped, and its two ports are respectively communicated with the inner cavities 121 of the two current collecting units 11.

Optionally, in each current collecting unit 11, the male pipe connector 13 and the female pipe connector 14 are coaxially arranged.

In the above embodiments, the two collecting units 11 can serve as the liquid inlet port and liquid outlet port of the flow channel 22 of the thermal management plate 21 respectively, so that liquid can be introduced and discharged at the same end of the thermal management plate 21, thereby improving the structural compactness of the thermal management system and reducing the space occupied by the thermal management system.

In addition, the U-shaped flow channel 22 can also make the thermal management component 2 have better temperature uniformity.

In some embodiments, the current collector 1 is an injection-molded part, and/or the thermal management plate 21 is a metal plate.

In the above embodiments, the current collector 1 is an injection-molded part, which improves the molding efficiency of the current collector 1 and controls the weight and manufacturing cost of the thermal management system. The thermal management plate 21 is a metal plate, which effectively ensures the heat exchange efficiency between the thermal management plate 21 and the battery cells 41.

The main body 12, the male pipe connector 13 and the female pipe connector 14 are injection molded together. After these three parts are molded, the flexible sleeve 15 is then injection molded onto the male pipe connector 13 or the female pipe connector 14.

Optionally, the thermal management plate 21 is made of tertiary aluminum. The current collector 1 has a thermal expansion coefficient of 15×10⁻⁶/°C to 30×10⁻⁶/°C. Optionally, the current collector 1 may be made of one of the following materials: PA66/GF25 (polyamide 66 with 25% glass fiber), PA66/GF30 (polyamide 66 with 30% glass fiber), and PC/ABS (a plastic alloy composed of polycarbonate and acrylonitrile-butadiene-styrene copolymer). In this way, not only can the thermal management plate 21 have good thermal conductivity, but the thermal expansion coefficient of the current collector 1 can also be close to that of the thermal management plate 21, thereby effectively avoiding cracks in the joint surface therebetween due to thermal expansion and contraction.

In some embodiment, the thermal management plate 21 is a serpentine plate, so that when it is applied to the cylindrical battery cell 41, it can have a larger contact surface with the cylindrical battery cell 41, thereby improving the thermal management efficiency.

For example, the body of the thermal management plate 21 has a harmonica-shaped tube structure, and an insulating layer is provided on the surface of the harmonica-shaped tube structure.

Optionally, the insulating layer may be epoxy resin powder sprayed on the surface of the thermal management plate 21, or an insulating film attached to the surface of the thermal management plate 21. The material of the insulating film includes but are not limited to PET, PI, PVC, and PI+PET composite materials.

Compared to spraying epoxy resin powder, the insulating film can achieve higher precision in the thickness of the insulation layer on the surface of the thermal management plate 21, and the cost of forming the insulating layer is lower, which is beneficial to improve the yield rate of the incoming materials of the thermal management plate 21. The use of PET, PI, PVC, or PI+PET composite materials can effectively ensure the insulation stability and pressure resistance and anti-puncture properties of the insulating film attached to the serpentine tube.

Please refer to FIG. 11, which is a schematic diagram of a structure of a battery pack 4 according to some embodiments of the present application. Accordingly, some embodiments of the present application provide a battery pack 4. The battery pack 4 includes a battery cell 41 column and a thermal management system provided in some embodiments of the present application. There are multiple battery cell 41 columns. The multiple battery cell 41 columns are arranged in sequence in a first direction. Each of the battery cell 41 columns includes multiple battery cells 41 arranged in sequence in a second direction. There are multiple thermal management components 2. In the first direction, the multiple thermal management components 2 and the multiple battery cell 41 columns are alternately arranged in sequence.

The first direction is parallel to the direction in which the male pipe connector 13 and the female pipe connector 14 are connected by plugging. The second direction is parallel to the extension direction of the liquid cooling plate.

Specifically, the liquid inlet ports of the respective flow channels 22 of two adjacent thermal management components 2 are in communication, and the liquid outlet ports of the respective flow channels 22 of two adjacent thermal management components 2 are in communication. Specifically, in two adjacent thermal management components 2, the male pipe connector 13 of one thermal management component 2 is in connection with the female pipe connector 14 of the other thermal management component 2 by plugging, thereby communicating the liquid inlet ports of the respective flow channels 22 of the two adjacent thermal management components 2, and communicating the liquid outlet ports of the respective flow channels 22 of the two adjacent thermal management components 2.

It is understood that the battery pack 4 also includes components such as a battery house and a connecting bar. The battery cells 41 and the thermal management component 2 are disposed in the battery house. The connecting bar connects multiple battery cells 41 in series or in parallel.

In this embodiment, by adopting the thermal management system according to some embodiments of the present application, the thermal management plate 21 is adhesively connected to the current collector 1, thereby simplifying the assembly steps of the thermal management component 2 and shortening the time for connecting and fixing the thermal management plate 21 to the current collector 1. Thus, the assembly efficiency of the battery pack 4 is improved.

Among them, the battery pack 4 may also include a liquid inlet pipe 31, a liquid outlet pipe 32 and a temperature adjustment module 33. The liquid inlet pipe 31 is communicated with a liquid inlet port of a flow channel 22 of a thermal management component 2. The liquid outlet pipe 32 is communicated with a liquid outlet port of a flow channel 22 of a thermal management component 2. The two ports of the temperature adjustment module 33 are respectively communicated with the liquid inlet pipe 31 and the liquid outlet pipe 32, as shown in FIG. 12, which is a schematic diagram of a structure of the connection of the thermal management component 2 and the temperature adjustment module 33 according to some embodiments of the present application. The temperature adjustment module 33 is configured to adjust the temperature of the heat exchange medium from the liquid outlet pipe 32 and send the adjusted heat exchange medium to the liquid inlet pipe 31.

It can be understood that the temperature adjustment module 33 may include a compressor, a condenser, an evaporator, etc., connected by pipes, and be configured with a valve body to achieve cooling or heating of the battery cell.

## Claims

1. A thermal management component (2), comprising:
a current collector (1) having an inner cavity (121) and a plug hole (122) communicated with the inner cavity (121);
a thermal management plate (21) having a flow channel (22), wherein an end of the thermal management plate (21) is plugged into the plug hole (122), and the flow channel (22) is communicated with the inner cavity (121); and
a connecting adhesive layer (24) comprising a sealing adhesive layer (243) and a structural adhesive layer (244), wherein each of the sealing adhesive layer (243) and the structural adhesive layer (244) is disposed between a hole wall of the plug hole (122) and an outer circumferential surface of the thermal management plate (21), and extends in an annular shape along a circumference of the plug hole (122).

2. The thermal management component (2) according to claim 1, wherein the sealing adhesive layer (243) and the structural adhesive layer (244) are sequentially arranged in a direction away from a bottom of the plug hole (122).

3. The thermal management component (2) according to claim 2, wherein, in an axial direction of the plug hole (122), a length of a portion of the thermal management plate (21) plugged into the plug hole (122) is A, the sealing adhesive layer (243) has a length B, and the structural adhesive layer (244) has a length C, satisfying: 1mm≤B≤A-1mm, and C=A-B.

4. The thermal management component (2) according to claim 1, wherein, in a radial direction of the plug hole (122), a portion of the connecting adhesive layer (24) located between the hole wall of the plug hole (122) and the outer circumferential surface of the thermal management plate (21) has a thickness D1, satisfying: 1mm≤D1≤15mm.

5. The thermal management component (2) according to any one of claims 1 to 4, wherein the thermal management plate (21) has a connection end surface (211 ) facing a bottom of the plug hole (122), and in an axial direction of the plug hole (122), a portion of the connection adhesive layer (24) located between the connection end surface (211) and the bottom of the plug hole (122) has a length L1, satisfying: 2mm≤L1≤50mm.

6. The thermal management component (2) according to claim 5, wherein, in the axial direction of the plug hole (122), the connecting adhesive layer (24) has a length L2, and a depth to which the thermal management plate (21) is plugged into the plug hole (122) is A, satisfying: A+2mm≤L2 ≤A+50mm.

7. The thermal management component (2) according to any one of claims 1 to 6, wherein, in an axial direction of the plug hole (122), a length of a portion of the thermal management plate (21) plugged into the plug hole (122) is A, satisfying: 2mm≤A≤100mm.

8. The thermal management component (2) according to any one of claims 1 to 7, wherein the current collector (1) comprises a current collecting unit (11), and the current collecting unit (11) comprises:
a main body (12) provided with the inner cavity (121), the plug hole (122) and a first hole (123) and a second hole (124) that are communicated with the inner cavity ( 121);
a male pipe connector (13) connected to the current collector (1) and communicated with the first hole (123);
a female pipe connector (14) connected to the current collector (1) and communicated with the second hole (124); and
a flexible sleeve (15) disposed on an inner wall of the female pipe connector (14);
wherein the flexible sleeve (15) is configured to be sleeved onto the male pipe connector (13) when the female pipe connector (14) of the thermal management component (2) is in plug connection with the male pipe connector (13) of another thermal management component (2), and is in an elastically compressed state in a radial direction.

9. The thermal management component (2) according to claim 8, wherein the flexible sleeve (15) comprises a first constant-diameter section (152) and a first flared section (153) connected to each other, an outer circumferential surface of the first constant-diameter section (152) is connected to an inner circumferential surface of the female pipe connector (14), the first flared section (153) is located at an end of the first constant-diameter section (152) away from the main body (12), and the first flared section (153) gradually increases in size in a direction away from the main body (12).

10. The thermal management component (2) according to claim 9, wherein the female pipe connector (14) comprises a second constant-diameter section (142) and a second flared section (143), the outer circumferential surface of the first constant diameter section (152) is connected to an inner circumferential surface of the second constant-diameter section (142), and an outer circumferential surface of the first flared section (153) is connected to an inner circumferential surface of the second flared section (143).

11. The thermal management component (2) according to claim 8 or 9, wherein a wedge-shaped block (133 ) is provided on an outer circumferential surface of the male pipe connector (13), an inclined wedge surface of the wedge-shaped block (133) faces away from the main body (12), and the wedge-shaped block (133) extends in an annular shape along a circumference of the male pipe connector (13).

12. The thermal management component (2) according to any one of claims 9 to 11, wherein the thermal management component (2) comprises two current collecting units (11), main bodies (12) of the two current collecting units (11) are connected to each other, plug holes (122) of the two current collecting units (11) are located on a same side of the current collector (1), male pipe connectors (13 ) of the two current collecting units (11) face a same direction, and female pipe connectors (14 ) of the two current collecting units (11) face a same direction;
wherein a portion of the end of the thermal management plate (21) plugged into the plug hole (122) is a plug end (23), a port of the plug end (23) is located in the plug hole (122) of one of the two current collecting units (11), and another part of the plug end (23) is located in the plug hole (122) of another one of the two current collecting units (11); and the flow channel (22) is U-shaped, and two ports of the flow channel (22) are respectively communicated with inner cavities (121) of the two current collecting units (11).

13. A battery pack (4), comprising:
a plurality of battery cell (41) columns sequentially arranged in a first direction, wherein each of the battery cell (41) columns comprises a plurality of battery cells (41) sequentially arranged in a second direction; and
the thermal management component (2) according to any one of claims 1 to 12, wherein there are a plurality of thermal management components (2), and the thermal management components (2) and the battery cell (41) columns are alternately arranged in sequence in the first direction.
